# EUROPÄISCHE PATENTSCHRIFT

(11) **EP 2 235 473 B1**
(45) Veröffentlichungstag und Bekanntmachung des Hinweises auf die Patenterteilung: **17.06.2015**
(21) Anmeldenummer: 09704869.8
(22) Anmeldetag: 23.01.2009
(51) Int. Cl.: G01B 13/02

(54) **VORRICHTUNG UND VERFAHREN ZUR GEOMETRIEMESSUNG AN EINEM WERKSTÜCK**
DEVICE AND METHOD FOR MEASURING THE GEOMETRY OF A WORKPIECE
DISPOSITIF ET PROCÉDÉ DE MESURE GÉOMÉTRIQUE D'UNE PIÈCE

(30) Priorität: 25.01.2008 DE 102008007593
(43) Veröffentlichungstag der Anmeldung: 06.10.2010
(73) Patentinhaber: MARPOSS GMBH, 71384 Weinstadt (DE)
(72) Erfinder: BASAR, Ivan, 70469 Stuttgart (DE)
(74) Vertreter: Hoeger, Stellrecht & Partner Patentanwälte
(86) Internationale Anmeldenummer: PCT/EP2009/050791
(87) Internationale Veröffentlichungsnummer: WO 2009/092802

(56) Entgegenhaltungen:
- EP-A- 1 537 946
- DE-A1- 4 407 159
- DE-A1- 10 236 402

## Beschreibung

Die vorliegende Erfindung betrifft eine Vorrichtung zur Geometriemessung an einem Werkstück, umfassend ein Gehäuse mit einem Strömungskanal, in welchem eine Referenzdüse zur Durchströmung mit einem Messfluid angeordnet ist, eine erste Druckmesseinrichtung zum Messen eines ersten Messfluiddrucks stromaufwärts der Referenzdüse und eine zweite Druckmesseinrichtung zur zum Messen eines zweiten Messfluiddrucks stromabwärts der Referenzdüse.

Eine solche Vorrichtung ist sowohl aus der DE 102 36 402 A1 als auch aus der DE 44 07 159 A1 bekannt.

Vorrichtungen dieser Art werden beispielsweise für Messungen eines Innenoder eines Außendurchmessers eines Werkstücks verwendet. Hierbei wird ein Messfluid einem Strömungskanal zugeführt. Das Messfluid durchströmt den Strömungskanal entlang einer Messfluidströmungsrichtung. Das Messfluid ist mit einem ersten Messfluiddruck beaufschlagt, durchströmt zunächst eine in dem Strömungskanal angeordnete Referenzdüse und wird dann einer mit dem Strömungskanal fluidwirksam verbundenen Messdüse zugeführt. Das Messfluid strömt aus der Messdüse heraus in einen als Drosselstelle wirkenden Spalt zwischen der Messdüse und dem zu vermessenden Werkstück. Die von der Werkstückgeometrie abhängige Größe des Spalts beeinflusst die Drosselwirkung des Spalts und somit den zwischen der Referenzdüse und der Messdüse anliegenden zweiten Messfluiddruck stromabwärts der Referenzdüse. Auf diese Weise lässt sich durch Messung des ersten Messfluiddrucks und des zweiten Messfluiddrucks die Werkstückgeometrie bestimmen.

Bei einer Vielzahl von Werkstücken, beispielsweise bei Teilen von Einspritzpumpen oder Werkzeugmaschinen, ist es erforderlich, Werkstückabmessungen mit kleinsten Toleranzen herzustellen und die Einhaltung dieser Werkstückabmessungen zu überprüfen.

Hiervon ausgehend liegt der vorliegenden Erfindung die Aufgabe zu Grunde, eine Vorrichtung der eingangs genannten Art zu schaffen, welche besonders genaue Geometriemessungen ermöglicht.

Diese Aufgabe wird gemäss Anspruch 1 bei einer Vorrichtung der eingangs genannten Art erfindungsgemäß dadurch gelöst, dass die Vorrichtung eine Feuchtigkeitsmesseinrichtung zum Messen einer Messfluidfeuchtigkeit umfasst.

Der Feuchtegehalt des Messfluids beeinflusst die Viskosität des Messfluids und somit die durch den Strömungskanal der Vorrichtung strömende Messfluidmenge und die in Strömungsrichtung gesehen vor oder hinter der Referenzdüse anliegenden Messfluiddrücke. Beispielsweise wird als Messfluid Druckluft verwendet, deren Feuchte in Abhängigkeit der Aufbereitungsqualität der Druckluft variieren kann. Eine höhere Feuchte eines Messfluids erhöht die Viskosität, wodurch sich die durch den Strömungskanal strömende Messfluidmenge verringert und sich die in dem Strömungskanal anliegenden Messfluiddrücke erhöhen.

Mit Hilfe der Feuchtigkeitsmesseinrichtung kann die Messfluidfeuchtigkeit als weiterer Parameter zur Bestimmung der Abmessung eines Werkstücks herangezogen werden, wodurch sich die Genauigkeit der Bestimmung einer solchen Abmessung erhöht.

Die erste Druckmesseinrichtung und die zweite Druckmesseinrichtung können beispielsweise in Form eines ersten Drucksensors bzw. eines zweiten Drucksensors ausgebildet sein. Diese Druckmesseinrichtungen messen jeweils einen in Strömungsrichtung des Messfluids gesehen vor der Referenzdüse anliegenden ersten Druckmesswert und einen in Strömungsrichtung des Messfluids gesehen hinter der Referenzdüse anliegenden zweiten Druckmesswert. Diese Druckmesswerte können Absolut-Drücke sein oder Relativ-Drücke, beispielsweise relativ zu einem Umgebungsdruck der Vorrichtung.

Günstig ist es, wenn die Vorrichtung eine Differenzdruckmesseinrichtung zum Messen eines über der Referenzdüse anliegenden Messfluiddifferenzdrucks umfasst.

Die zusätzlich zu der ersten Druckmesseinrichtung und zu der zweiten Druckmesseinrichtung vorgesehene Differenzdruckmesseinrichtung ermöglicht es nun, den über der Referenzdüse anliegenden Messfluiddifferenzdruck direkt zu messen. Somit steht zusätzlich zu dem Messsignal der ersten Druckmesseinrichtung und dem Messsignal der zweiten Druckmesseinrichtung ein drittes Messsignal in Form eines dritten Druckmesswertes zur Verfügung, welches zur Bestimmung einer Abmessung eines Werkstücks herangezogen werden kann. Jede der insgesamt mindestens drei Druckmesseinrichtungen erzeugt ein Messsignal, welches mit einer Messungenauigkeit behaftet ist und daher nicht immer mathematisch exakt einem tatsächlich anliegenden Druckwert entspricht. Mit Hilfe des dritten Messsignals ist es nun möglich, diese Messungenauigkeiten zu kompensieren, indem für die Bestimmung der Abmessung eines Werkstücks alle drei Messsignale herangezogen werden und/oder indem die Plausibilität der drei Messsignale zunächst überprüft wird, bevor mindestens zwei dieser Messsignale für die Bestimmung einer Abmessung eines Werkstücks herangezogen werden. Mit der erfindungsgemäßen Vorrichtung kann eine Geometriemessung an einem Werkstück also auch unter Verwendung von nur zwei der insgesamt mindestens drei zur Verfügung stehenden Druckmesseinrichtungen durchgeführt werden.

Darüber hinaus ist es durch die Verwendung von insgesamt drei Druckmesseinrichtungen in einfacher Weise möglich, einen Defekt einer der drei Messeinrichtungen feststellen zu können, beispielsweise, indem ein mittels der Differenzdruckmesseinrichtung gemessener Differenzdruck mit einer rechnerisch ermittelten Differenz zwischen dem ersten Druckmesswert und dem zweiten Druckmesswert verglichen wird.

In vorteilhafter Weise ist die Differenzdruckmesseinrichtung stromaufwärts und stromabwärts der Referenzdüse fluidwirksam mit dem Strömungskanal verbunden. Dies ermöglicht eine direkte und genaue Messung des über der Referenzdüse anliegenden Messfluiddifferenzdrucks.

Bevorzugt ist es, wenn die Differenzdruckmesseinrichtung in Form eines Differenzdrucksensors ausgebildet ist. Dies ermöglicht die Bereitstellung einer kompakten Differenzdruckmesseinrichtung.

Ferner ist es bevorzugt, wenn die Differenzdruckmesseinrichtung an oder in dem Gehäuse angeordnet ist, so dass eine kompakte Vorrichtung geschaffen werden kann.

Günstig ist es, wenn die Feuchtigkeitsmesseinrichtung eine Feuchtigkeitsmessfläche aufweist, welche fluidwirksam mit dem Strömungskanal verbunden ist. Dies ermöglicht eine unmittelbare Messung der Feuchtigkeit des den Strömungskanal durchströmenden Messfluids.

In vorteilhafter Weise ist die Feuchtigkeitsmesseinrichtung in Form eines Feuchtigkeitssensors ausgebildet. Dies ermöglicht die Bereitstellung einer kompakten Feuchtigkeitsmesseinrichtung.

Bevorzugt ist es ferner, dass die Feuchtigkeitsmesseinrichtung an oder in dem Gehäuse angeordnet ist. Dies ermöglicht die Bereitstellung einer kompakten Vorrichtung.

Besonders bevorzugt ist es, wenn die Vorrichtung eine Temperaturmesseinrichtung zum Messen einer Messfluidtemperatur umfasst. Hierdurch steht ein weiterer Parameter zur Bestimmung einer Abmessung eines Werkstücks zur Verfügung. Dieser Parameter ist besonders wichtig, da er die durch den Strömungskanal strömende Messfluidmenge direkt beeinflusst, aber auch die Geometrie der Referenzdüse, welche sich in Abhängigkeit des Temperaturkoeffizienten des Referenzdüsenmaterials verändert.

Günstig ist es, wenn die Temperaturmesseinrichtung eine Temperaturmessfläche aufweist, welche fluidwirksam mit dem Strömungskanal verbunden ist. Dies ermöglicht eine unmittelbare Messung einer Temperatur des Messfluids.

Vorzugsweise ist die Temperaturmesseinrichtung in Form eines Temperatursensors ausgebildet.

Günstig ist es ferner, wenn die Temperaturmesseinrichtung an oder in dem Gehäuse angeordnet ist.

Bei einer weiteren bevorzugten Ausführungsform der Erfindung ist eine Umgebungstemperaturmesseinrichtung zum Messen einer Umgebungstemperatur der Vorrichtung vorgesehen. Eine solche Umgebungstemperaturmesseinrichtung ermöglicht es, einen weiteren Parameter zur Bestimmung einer Abmessung eines Werkstücks bereitzustellen. Alternativ oder zusätzlich hierzu ist es möglich, die Temperatur der Vorrichtung selbst, einer Messdüse der Vorrichtung und/oder die Temperatur des Werkstücks zu messen. Mit Hilfe der Umgebungstemperaturmesseinrichtung ist es jedoch möglich, zumindest dann auf die Temperatur der Vorrichtung, einer Messdüse der Vorrichtung und/oder des Werkstücks rückzuschließen, wenn sich die auf eine Zeiteinheit bezogene Temperaturänderung der Umgebung der Vorrichtung in einem für Fertigungsbedingungen üblichen Rahmen hält.

Nach einer Ausführungsform der Erfindung weist die Umgebungstemperaturmesseinrichtung eine Temperaturmessfläche auf, welche fluidwirksam mit der Umgebung der Vorrichtung verbunden ist. Dies ermöglicht eine unmittelbare Messung der Umgebungstemperatur.

Alternativ oder zusätzlich hierzu ist es vorteilhaft, wenn die Umgebungstemperaturmesseinrichtung eine Temperaturmessfläche aufweist, welche unter Zwischenlage eines Zwischenkörpers mit der Umgebung der Vorrichtung in thermischem Kontakt steht. Ein solcher Zwischenkörper kann beispielsweise durch einen Gehäuseabschnitt der Vorrichtung gebildet sein, welcher die Temperaturmessfläche vor mechanischen Einwirkungen schützt. Die Verwendung eines Zwischenkörpers ermöglicht es außerdem, dass die Umgebungstemperaturmesseinrichtung weniger empfindlich auf kurzfristige thermische Störungen reagiert, beispielsweise durch Berührkontakt des Fertigungspersonals.

Ferner ist es bevorzugt, wenn die Umgebungstemperaturmesseinrichtung in Form eines Temperatursensors ausgebildet ist.

Günstig ist es, wenn die Umgebungstemperaturmesseinrichtung an oder in dem Gehäuse angeordnet ist, so dass eine kompakte Vorrichtung geschaffen werden kann.

In vorteilhafter Weise umfasst die Vorrichtung eine Auswerteeinheit zur Auswertung der Signale mindestens einer Messeinrichtung. Diese Auswerteeinheit kann ebenfalls an oder in dem Gehäuse angeordnet sein. Alternativ oder zusätzlich hierzu kann die Auswerteeinheit auch außerhalb der Vorrichtung (extern) vorgesehen sein.

Die Messeinrichtungen der Vorrichtung, also die erste Druckmesseinrichtung und/oder die zweite Druckmesseinrichtung und/oder die Differenzdruckmesseinrichtung und/oder die Feuchtigkeitsmesseinrichtung und/oder die Temperaturmesseinrichtung zum Messen der Messfluidtemperatur und/oder die Umgebungstemperaturmesseinrichtung zum Messen einer Umgebungstemperatur der Vorrichtung, können derart beschaffen sein, dass sie analoge oder digitale Messwerte bereitstellen. Jede dieser Messeinrichtungen kann einer eigenen Adresse zugeordnet sein. Die Kopplung mindestens einer der Messeinrichtungen mit der Auswerteeinheit kann drahtgebunden oder drahtlos erfolgen. Vorzugsweise erfolgt der Datentransfer zwischen mindestens einer der Messeinrichtungen und der Auswerteeinheit über ein Bussystem.

In vorteilhafter Weise umfasst die Vorrichtung eine Messdüse zur Durchströmung mit dem Messfluid. Das Messfluid durchströmt bei Betrieb der Vorrichtung zunächst die Referenzdüse und dann die Messdüse. Die Messdüse ist in ihrer Geometrie der an einem Werkstück zu bestimmenden Abmessung angepasst. Beispielsweise kann zur Messung eines Innendurchmessers eines Werkstücks ein Messdorn und zur Messung eines Außendurchmessers eines Werkstücks ein Messring verwendet werden.

Die erfindungsgemäße Vorrichtung ermöglicht es, die Abmessungen von Zylindern und Kolben hochgenau zu bestimmen, welche insbesondere für den Einsatz in Einspritzpumpen vorgesehen sind.

Die Erfindung betrifft ferner ein Verfahren gemäss Anspruch 11 zur Geometriemessung an einem Werkstück, wobei eine in einem Strömungskanal eines Gehäuses angeordnete Referenzdüse mit einem Messfluid durchströmt wird, wobei ein erster Messfluiddruck stromaufwärts der Referenzdüse gemessen wird und wobei ein zweiter Messfluiddruck stromabwärts der Referenzdüse gemessen wird.

Der Erfindung liegt die weitere Aufgabe zu Grunde, ein Verfahren zur Geometriemessung an einem Werkstück bereitzustellen, welches besonders genau ist. Diese Aufgabe wird bei dem vorstehend genannten Verfahren erfindungsgemäß dadurch gelöst, dass eine Messfluidfeuchtigkeit des Messfluids gemessen wird. Hierdurch ergeben sich die vorstehend unter Bezugnahme auf die erfindungsgemäße Vorrichtung beschriebenen Vorteile.

Vorteilhaft ist es ferner, wenn zusätzlich zu dem ersten Messfluiddruck und dem zweiten Messfluiddruck ein über der Referenzdüse anliegender Messfluiddifferenzdruck gemessen wird.

Nach einer vorteilhaften Ausführungsform der Erfindung wird eine Abweichung zwischen einem gemessenen Messfluiddifferenzdruck und der Differenz aus einem gemessenen ersten Messfluiddruck und aus einem gemessenen zweiten Messfluiddruck ermittelt. Die Ermittlung einer solchen Abweichung ermöglicht es, zu überprüfen, ob die für die Messung des ersten Messfluiddrucks, des zweiten Messfluiddrucks und des Messfluiddifferenzdrucks verwendeten Messeinrichtungen funktionsfähig sind und plausible Messwerte erfassen.

In vorteilhafter Weise wird die ermittelte Abweichung mit einem Grenzwert verglichen, so dass für den Fall, dass die ermittelte Abweichung oder der Betrag der ermittelten Abweichung den Grenzwert übersteigt, festgestellt werden kann, dass eine der Messeinrichtungen verstimmt oder defekt ist und ausgetauscht werden muss.

Vorzugsweise ist der Grenzwert einstellbar, so dass eine Anpassbarkeit an eine für eine bestimmte Geometriemessung an einem Werkstück erforderliche Genauigkeit der Messung gewährleistet ist.

Ferner ist es bevorzugt, wenn unter Verwendung des gemessenen ersten Messfluiddrucks und/oder des gemessenen zweiten Messfluiddrucks eine Messfluidmenge ermittelt wird und wenn eine Abmessung des Werkstücks unter Verwendung der ermittelten Messfluidmenge bestimmt wird. Dieses Verfahren ermöglicht es, eine Abmessung eines Werkstücks in Abhängigkeit einer Messfluidmenge zu bestimmen, welche auf Basis mindestens eines Messfluiddrucks ermittelt werden kann, beispielsweise mit Hilfe einer Zuordnungsfunktion. Somit kann eine aus einer Messdüse austretende Messfluidmenge bestimmt werden. Da zwischen dieser Messfluidmenge einerseits und dem Abstand zwischen einer Messdüse und einer Aufprallfläche einer zu bestimmenden Abmessung eines Werkstücks andererseits ein unmittelbarer Zusammenhang besteht, kann eine solche Abmessung unter Verwendung der Messfluidmenge besonders genau bestimmt werden.

Die Messgenauigkeit kann weiter verbessert werden, wenn die Messfluidmenge unter Verwendung des gemessenen Messfluiddifferenzdrucks ermittelt wird. Die Messgenauigkeit kann auch verbessert werden, indem die Messfluidmenge unter Verwendung der gemessenen Messfluidfeuchtigkeit des Messfluids ermittelt wird.

Eine weitere Erhöhung der Genauigkeit der Geometriemessung an einem Werkstück kann erreicht werden, wenn eine Messfluidtemperatur gemessen wird und wenn die Messfluidmenge unter Verwendung der gemessenen Messfluidtemperatur ermittelt wird.

Alternativ hierzu oder zusätzlich ist es vorteilhaft, wenn eine Umgebungstemperatur gemessen wird und wenn die Abmessung des Werkstücks unter Verwendung der gemessenen Umgebungstemperatur bestimmt wird.

Vorzugsweise wird die Messfluidmenge auf eine Zeiteinheit bezogen, beispielsweise auf eine zwischen zwei Messungen anliegende Zeitspanne.

Die Erfindung betrifft ferner die Verwendung einer vorstehend beschriebenen Vorrichtung zur Geometriemessung an einem Werkstück zur Durchführung eines vorstehend beschriebenen Verfahrens.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Fig. 1: eine perspektivische Ansicht einer ersten Ausführungsform einer Vorrichtung zur Geometriemessung an einem Werkstück;
- Fig. 2: eine Vorderansicht der Vorrichtung gemäß Figur 1;
- Fig. 3: eine Rückansicht der Vorrichtung gemäß Figur 1;
- Fig. 4: eine erste Seitenansicht der Vorrichtung gemäß Figur 1;
- Fig. 5: eine Draufsicht der Vorrichtung gemäß Figur 1;
- Fig. 6: eine zweite Seitenansicht der Vorrichtung gemäß Figur 1;
- Fig. 7: eine Untersicht der Vorrichtung gemäß Figur 1;
- Fig. 8: eine Ansicht längs der Linie VIII - VIII in Figur 5 der Vorrichtung gemäß Figur 1 und
- Fig. 9: eine der Figur 8 entsprechende Ansicht einer erfindungsgemässen

Ausführungsform einer Vorrichtung zur Geometriemessung an einem Werkstück.

Gleiche oder funktional äquivalente Elemente sind in allen Figuren mit denselben Bezugszeichen bezeichnet.

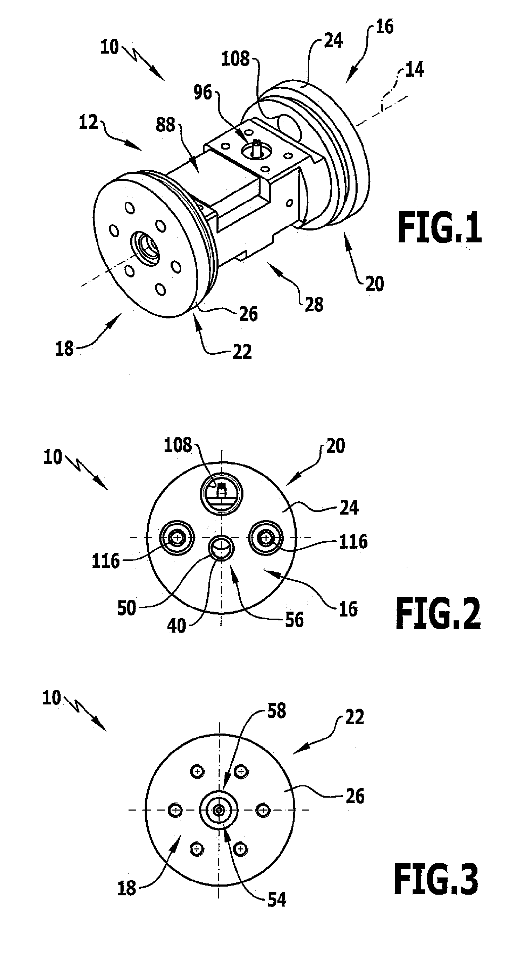

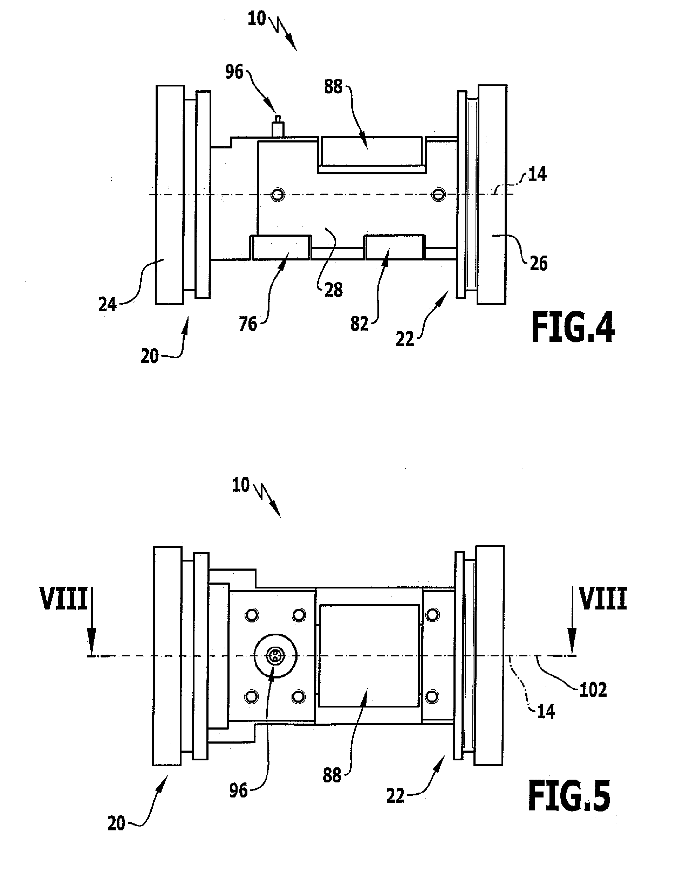

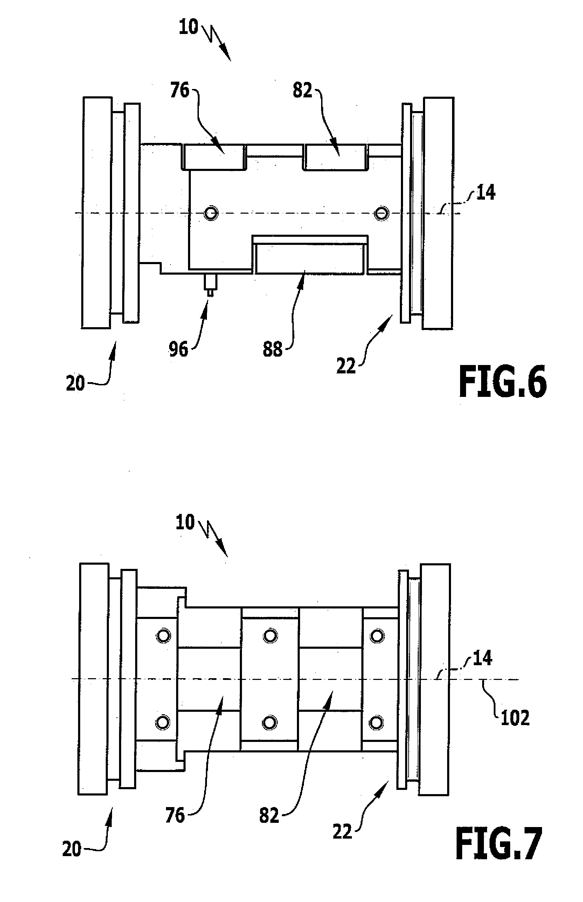

Eine erste Ausführungsform einer mit 10 bezeichneten Vorrichtung zur Geometriemessung an einem Werkstück ist in den Figuren 1 bis 8 dargestellt.

Die Vorrichtung 10 weist ein Gehäuse 12 auf, welches sich entlang einer Gehäuseachse 14 erstreckt. Entlang der Gehäuseachse 14 gesehen erstreckt sich die Vorrichtung 10 zwischen einer Vorderseite 16 (vgl. Fig. 2) und einer Rückseite 18 (vgl. Fig. 3).

Das Gehäuse 12 weist ein erstes Gehäuseteil 20 und ein zweites Gehäuseteil 22 auf. Das erste Gehäuseteil 20 umfasst ein im Wesentlichen zylindrisches, insbesondere scheibenförmiges Gehäuseelement 24, welches die Vorderseite 16 des Gehäuses 12 ausbildet. Das zweite Gehäuseteil 22 umfasst ein im Wesentlichen zylindrisches, insbesondere scheibenförmiges Gehäuseelement 26, welches die Rückseite 18 des Gehäuses 12 ausbildet.

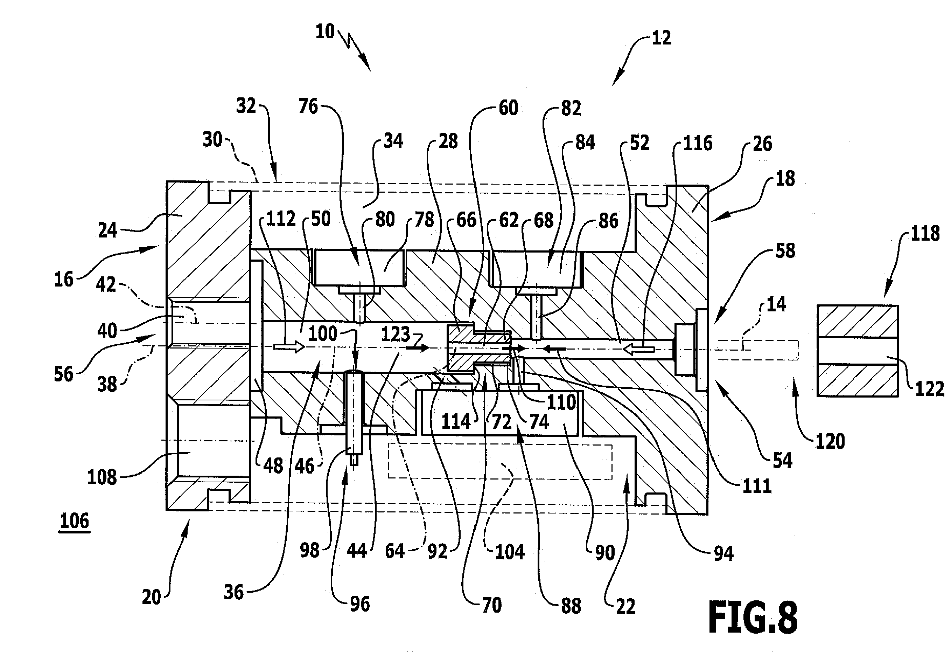

Das zweite Gehäuseteil 22 umfasst ferner ein zentrales Gehäuseelement 28. Das zentrale Gehäuseelement 28 und das Gehäuseelement 26 sind miteinander einstückig ausgebildet. Das zentrale Gehäuseelement 28 weist quer zu der Gehäuseachse 14 gesehen einen kleineren Querschnitt auf als die Gehäuseelemente 24 und 26. Zwischen den Gehäuseelementen 24 und 26 ist ein hohlzylindrisches Gehäuseelement 30 angeordnet, welches in Figur 8 mit gestrichelten Linien angedeutet ist. Das Gehäuseelement 30 bildet eine zylindrische Außenwand 32 des Gehäuses 12 aus. Die Vorrichtung 10 umfasst einen ringförmigen Zwischenraum 34, der bezogen auf die Gehäuseachse 14 nach radial außen durch das Gehäuseelement 30 und nach radial innen durch das zentrale Gehäuseelement 28 begrenzt ist.

Die Vorrichtung 10 umfasst einen sich zwischen der Vorderseite 16 und der Rückseite 18 des Gehäuses 12 erstreckenden Strömungskanal 36. Der Strömungskanal 36 erstreckt sich entlang einer Strömungskanalachse 38, welche vorzugsweise mit der zentralen Gehäuseachse 14 des Gehäuses 12 fluchtet.

Das Gehäuseelement 24 umfasst einen sich zwischen der Vorderseite 16 und dem zentralen Gehäuseelement 28 erstreckenden ersten Teilabschnitt 40 des Strömungskanals 36. Der erste Teilabschnitt 40 weist eine Teilabschnittsachse 42 auf. Das zweite Gehäuseteil 22 weist einen zweiten Teilabschnitt 44 des Strömungskanals 36 auf und umfasst eine Teilabschnittsachse 46. Die Teilabschnittsachsen 42 und 46 sind geringfügig zueinander beabstandet oder fluchten miteinander.

Der zweite Teilabschnitt 44 des Strömungskanals 36 umfasst einen benachbart zu dem Gehäuseelement 24 angeordneten Verteilerraum 48 sowie einen sich hieran anschließenden Strömungskanalabschnitt 50. Der Strömungskanalabschnitt 50 mündet an seinem dem Verteilerraum 48 abgewandten Ende an einem Strömungskanalabschnitt 52. Der Strömungskanalabschnitt 52 endet auf Höhe der Rückseite 18 des Gehäuses 12 an einem im Querschnitt erweiterten Endabschnitt 54.

Der erste Teilabschnitt 40 bildet einen Kanaleingang 56 des Strömungskanals 36; der Endabschnitt 54 bildet einen Kanalausgang 58 des Strömungskanals 36.

In dem Strömungskanal 36 ist eine Referenzdüse 60 angeordnet, welche einen Düsenkanal 62 mit einer Düsenkanalachse 64 aufweist. Vorzugsweise fluchtet die Düsenkanalachse 64 mit der Strömungskanalachse 38 des Strömungskanals 36.

Die Referenzdüse 60 weist ein Kopfteil 66 sowie ein einstückig mit diesem ausgebildetes Fußteil 68 auf. Der Querschnitt des Kopfteils 66 ist größer als der des Fußteils 68. Das Kopfteil 66 weist einen geringfügig kleineren Querschnitt auf als der Strömungskanalabschnitt 50.

Zur Verbindung der Referenzdüse 60 mit dem Gehäuse 12 umfasst die Vorrichtung 10 eine Verbindungseinrichtung 70. Diese umfasst einen ersten Verbindungsabschnitt 72, welcher an dem Gehäuse 12 angeordnet und insbesondere in Form eines Innengewindes ausgebildet ist. Die Verbindungseinrichtung 70 umfasst ferner einen zweiten Verbindungsabschnitt 74, welcher an der Referenzdüse 60 vorgesehen ist und vorzugsweise in Form eines Außengewindes ausgebildet ist.

Die Vorrichtung 10 weist eine Vielzahl von Messeinrichtungen auf, welche fluidwirksam mit dem Strömungskanal 36 verbunden sind und dazu dienen Parameter eines den Strömungskanal 36 durchströmenden Messfluids zu messen.

Die Vorrichtung 10 umfasst eine erste Druckmesseinrichtung 76 in Form eines ersten Drucksensors 78. Der erste Drucksensor 78 steht über eine Leitung 80 in fluidwirksamer Verbindung mit dem Strömungskanalabschnitt 50 des Strömungskanals 36 stromaufwärts der Referenzdüse 60.

Die Vorrichtung 10 umfasst ferner eine zweite Druckmesseinrichtung 82 in Form eines zweiten Drucksensors 84. Der zweite Drucksensor 84 ist über eine Leitung 86 fluidwirksam mit dem Strömungskanalabschnitt 52 des Strömungskanals 36 stromabwärts der Referenzdüse 60 verbunden.

Die Vorrichtung 10 umfasst ferner eine Differenzdruckmesseinrichtung 88 in Form eines Differenzdrucksensors 90. Der Differenzdrucksensor 90 ist über eine erste Leitung 92 mit dem Strömungskanalabschnitt 50 stromaufwärts der Referenzdüse 60 und über eine zweite Leitung 94 mit dem Strömungskanalabschnitt 52 stromabwärts der Referenzdüse fluidwirksam verbunden.

Ferner umfasst die Vorrichtung 10 eine Temperaturmesseinrichtung 96 in Form eines Temperatursensors 98. Der Temperatursensor 98 weist eine in Richtung auf den Strömungskanalabschnitt 50 weisende Temperaturmessfläche 100 auf.

Die Messeinrichtungen 76, 82, 88 und 96 sind innerhalb einer gemeinsamen ersten Gehäuseebene 102 angeordnet. Vorzugsweise erstreckt sich die Gehäuseachse 14 innerhalb der Gehäuseebene 102. Insbesondere ist es bevorzugt, wenn die erste Druckmesseinrichtung 76 und die zweite Druckmesseinrichtung 82 bezogen auf den Strömungskanal 36 auf der gegenüberliegenden Seite der Differenzdruckmessseinrichtung 88 angeordnet sind. Ferner ist es bevorzugt, wenn die Temperaturmesseinrichtung 96 innerhalb der Gehäuseebene 102 bezogen auf den Strömungskanal 36 auf derselben Seite wie die Differenzdruckmesseinrichtung 88 angeordnet ist.

Die Messeinrichtungen 76, 82, 88 und 96 sind mit einer in Figur 8 in gestrichelten Linien angedeuteten Auswerteeinheit 104 verbunden. Die Auswerteeinheit 104 ist vorzugsweise in dem Zwischenraum 34 des Gehäuses 12 angeordnet. Aus Übersichtsgründen sind die Datenleitungen, welche die Messeinrichtungen 76, 82, 88 und 96 mit der Auswerteeinheit 104 verbinden, in der Zeichnung nicht dargestellt. Die Auswerteeinheit 104 kann drahtlos oder drahtgebunden mit weiteren datentechnischen Einrichtungen verbunden sein, welche beispielsweise in der Umgebung 106 der Vorrichtung 10 angeordnet sind. Für eine drahtgebundene Verbindung zwischen der Auswerteeinheit 104 und einer weiteren datentechnischen Einrichtung umfasst das erste Gehäuseteil 20 einen Kabelkanal 108 zur Verbindung des Zwischenraums 34 des Gehäuses 12 mit der Umgebung 106.

Der Düsenkanal 62 der Referenzdüse 60 weist entlang der Düsenkanalachse 64 gesehen einen Querschnitt auf, welcher sich entlang einer der Referenzdüse 60 zugeordneten, ersten Durchströmungsrichtung 110 gesehen zunächst verengt und dann wieder erweitert. Diese Durchströmungsrichtung 110 ist zu einer zweiten Durchströmungsrichtung 111 der Referenzdüse 60 entgegengerichtet. Die Referenzdüse 60 ist vorzugsweise eine standardisierte Düse, welche beispielsweise für eine Verwendung bei einem Vergaser bestimmt ist und bei einer solchen Verwendung in der ersten Durchströmungsrichtung 110 mit Luft und/oder Kraftstoff durchströmt wird.

Zur Herstellung der Vorrichtung 10 wird die Referenzdüse 60 mit dem Fußteil 68 voran in einer Fügerichtung 112 in den Strömungskanalabschnitt 50 des zweiten Gehäuseteils 22 eingeführt. Die Fügerichtung 112 und die erste Durchströmungsrichtung 110 der Referenzdüse 60 sind identisch. Mit Hilfe der Verbindungseinrichtung 70 wird die Referenzdüse 60 mit dem zweiten Gehäuseteil 22 verbunden, indem der zweite Verbindungsabschnitt 74 in den ersten Verbindungsabschnitt 72 eingeschraubt wird. Zur Positionierung der Referenzdüse 60 entlang der Gehäuseachse 14 weist das zweite Gehäuseteil 22 einen Anschlag 114 auf. In dem fertig gefügten Zustand der Referenzdüse 60 mit dem Gehäuse 12 liegt das Kopfteil 66 der Referenzdüse 60 an dem Anschlag 114 an.

Nach der Montage der Referenzdüse 60 in dem Strömungskanal 36 werden das erste Gehäuseteil 20 und das zweite Gehäuseteil 22 miteinander verbunden, beispielsweise mit Hilfe mindestens einer Schraubverbindung 116 (vgl. Fig. 2).

Bei einer alternativen, in der Zeichnung nicht dargestellten Ausführungsform der Vorrichtung 10 weist der Strömungskanalabschnitt 52 stromabwärts der Referenzdüse 60 einen so großen Querschnitt auf, dass sich die Referenzdüse 60 in einer zu der ersten Durchströmungsrichtung 110 entgegensetzten Fügerichtung 116 mit dem Gehäuse 12 fügen lässt. Bei dieser Ausführungsform ist es bevorzugt, wenn der an der Referenzdüse 60 ausgebildete zweite Verbindungsabschnitt 74 der Verbindungseinrichtung 70 an dem Kopfteil 66 der Referenzdüse 60 angeordnet ist.

Die Vorrichtung 10 funktioniert wie folgt.

Zur Vorbereitung der Messung an einem Werkstück 118 (vgl. Fig. 8) wird eine Messdüse 120 fluidwirksam mit dem Kanalausgang 58 des Strömungskanals 36 verbunden. Beispielsweise weist das Werkstück 118 eine Bohrung 122 auf, deren Durchmesser überprüft werden soll. Die Geometrie der Messdüse 120 ist der Geometrie der zu überprüfenden Abmessung eines Werkstücks 118 angepasst. Zur Vorbereitung einer Messung an dem Werkstück 118 wird die Messdüse 120 in die Bohrung 122 eingeführt. Anschließend wird der Strömungskanal 36 mit einem Messfluid beaufschlagt, insbesondere mit Druckluft. Das Messfluid durchströmt den Strömungskanal 36 in einer Messfluidströmungsrichtung 123, welche von dem Kanaleingang 56 hin zu dem Kanalausgang 54 des Strömungskanals gerichtet ist und der ersten Durchströmungsrichtung 110 der Referenzdüse 60 entspricht. Das Messfluid gelangt über den Kanaleingang 56 in den ersten Teilabschnitt 40 des Strömungskanals 36 und strömt weiter durch den Verteilerraum 48, den Strömungskanalabschnitt 50, den Düsenkanal 62 und den Strömungskanalabschnitt 52 zum Kanalausgang 54 und von diesem zur Messdüse 120. Die Messdüse 120 weist Austrittsöffnungen für das Messfluid auf, sodass das Messfluid aus der Messdüse 120 austreten kann. Die Geometrie der Messdüse 120 ist derart auf die zu prüfende Abmessung des Werkstücks 118 abgestimmt, dass ein Spalt entsteht, welcher als Drosselstelle wirkt, an dem ein Druckverlust des Messfluids auftritt.

Die Referenzdüse 60 wirkt als weitere Drosselstelle, an welcher ebenfalls ein Druckverlust auftritt. Mittels der Druckmesseinrichtungen 76, 82 und 88 können Drücke in den Strömungskanalabschnitten 50 und 52 gemessen und in Form von Druckmesswerten an die Auswerteeinheit 104 weitergegeben werden. In der Auswerteeinheit 104 oder in einer mit der Auswerteeinheit 104 datentechnisch verbundenen externen Einrichtung sind Zuordnungsfunktionen hinterlegt, welche durch Messung an einem Referenzwerkstück ermittelt werden. Mit Hilfe dieser Zuordnungsfunktionen kann eine Werkstückabmessung an einem zu prüfenden Werkstück 118 bestimmt werden.

In diesen Zuordnungsfunktionen können weitere Parameter hinterlegt sein, welche einen Einfluss auf die Genauigkeit der Messung an einem Werkstück 118 haben. Diese Parameter sind beispielsweise die Temperatur und/oder die Feuchte des Messfluids und/oder die Temperatur der Umgebung 106 der Vorrichtung 10. Um festzustellen, welchen Einfluss die Temperatur und/oder die Feuchte des Messfluids und/oder die Umgebungstemperatur auf eine Messung hat, können Referenzmessungen an einem Referenzwerkstück durchgeführt werden. Während dieser Referenzmessungen wird vorzugsweise jeweils nur einer der genannten Parameter variiert, sodass die Zuordnungsfunktionen um Korrekturfunktionen ergänzt oder diese Korrekturfunktionen in die Zuordnungsfunktionen integriert werden können.

Mit Hilfe der Druckmesseinrichtungen 76, 82 und 88 lassen sich jeweils diesen Einrichtungen zugeordnete Druckmesswerte erfassen. Besonders bevorzugt ist es, wenn mindestens ein Druckmesswert verwendet wird, um eine Messfluidmenge zu bestimmen, welche beispielsweise innerhalb einer vorgebbaren Zeitspanne durch die Vorrichtung 10 hindurchströmt. Diese Messfluidmenge kann mit Hilfe einer durch Messung an einem Referenzwerkstück bestimmten Zuordnungsfunktion in eine Abmessung eines zu prüfenden Werkstücks 118 umgerechnet werden. Vorzugsweise erfolgt die Bestimmung der Messfluidmenge zusätzlich in Abhängigkeit mindestens eines der Parameter Temperatur und/oder Feuchte des Messfluids und/oder Temperatur der Umgebung 106.

Die Vorrichtung 10 ermöglicht es darüber hinaus, einen Defekt einer der Druckmesseinrichtungen 76, 82 und/oder 88 feststellen zu können. Hierfür kann eine Abweichung zwischen dem mit Hilfe der Differenzdruckmesseinrichtung 88 gemessenen Differenzdruck einerseits und der Differenz aus dem ersten Druckmesswert und dem zweiten Druckmesswert andererseits ermittelt werden. Übersteigt die ermittelte Abweichung einen vorgebbaren Grenzwert, kann hieraus geschlossen werden, dass mindestens eine der Druckmesseinrichtungen 76, 82, 88 defekt ist und die Vorrichtung 10 ausgetauscht und/oder repariert werden muss.

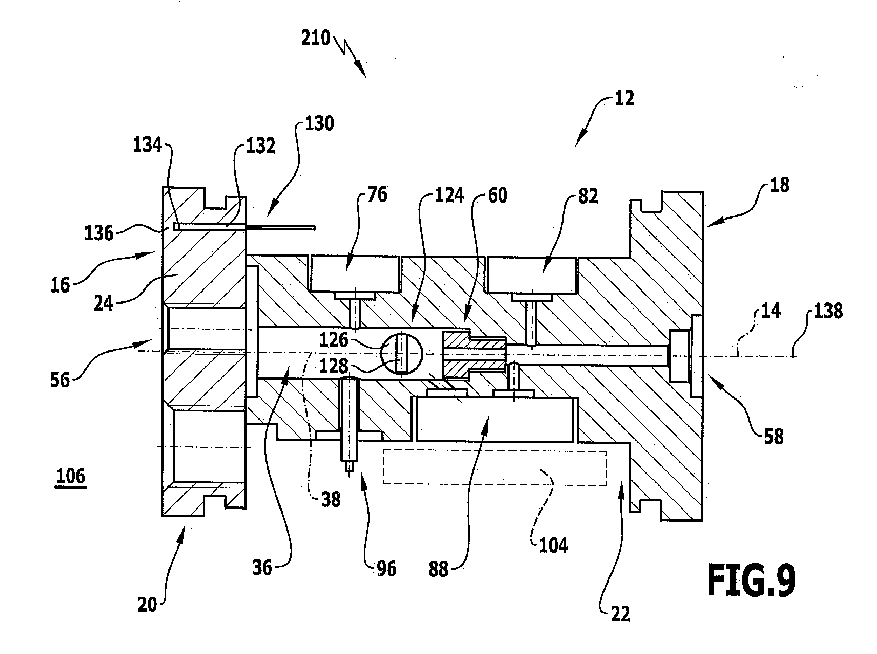

Eine in Figur 9 dargestellte, mit 210 bezeichnete Ausführungsform einer Vorrichtung zur Geometriemessung an einem Werkstück 118 weist einen zu der vorstehend beschriebenen Vorrichtung 10 zur Geometriemessung an einem Werkstück 118 ähnlichen Aufbau auf. Insofern wird auf die vorstehende Beschreibung bezüglich des Aufbaus, der Herstellung und der Funktionsweise der Vorrichtung 10 Bezug genommen.

Im Unterschied zu der Vorrichtung 10 umfasst die Vorrichtung 210 zusätzlich zu den Messeinrichtungen 76, 82, 88 und 96 erfindungsgemäss eine Feuchtigkeitsmesseinrichtung 124 in Form eines Feuchtigkeitssensors 126. Der Feuchtigkeitssensor 126 umfasst eine Feuchtigkeitsmessfläche 128, welche fluidwirksam mit dem Strömungskanal 36 der Vorrichtung 210 verbunden ist. Vorzugsweise steht die Feuchtigkeitsmessfläche 128 in fluidwirksamer Verbindung mit dem Strömungskanalabschnitt 50 des Strömungskanals 36 stromaufwärts der Referenzdüse 60.

Ferner umfasst die Vorrichtung 210 eine Umgebungstemperaturmesseinrichtung 130 in Form eines Temperatursensors 132. Der Temperatursensor 132 ist außerhalb des Strömungskanals 36 angeordnet, beispielsweise in oder an dem ersten Gehäuseteil 20. Der Temperatursensor 132 weist eine der Vorderseite 16 der Vorrichtung 210 zugewandte Temperaturmessfläche 134 auf. Zwischen der Temperaturmessfläche 134 und der Vorderseite 16 der Vorrichtung 210 ist ein Zwischenkörper 136 angeordnet, mittels welchem die Temperaturmessfläche 134 und die Umgebung 106 der Vorrichtung 210 miteinander in thermischem Kontakt stehen. Der Zwischenkörper 136 ist vorzugsweise durch einen Materialabschnitt des Gehäuses 12 gebildet, insbesondere durch einen Materialabschnitt des Gehäuseelements 24.

Die Feuchtigkeitsmesseinrichtung 124 ist in einer zweiten Gehäuseebene 138 angeordnet. Die zweite Gehäuseebene 138 steht zu der in Figur 9 dargestellten Schnittebene, welche der ersten Gehäuseebene 102 der Vorrichtung 10 entspricht, senkrecht oder im Wesentlichen senkrecht.

Bei einer alternativen, in der Zeichnung nicht dargestellten Ausführungsform einer Vorrichtung 210 ist die Temperaturmesseinrichtung 96 zur Messung einer Temperatur eines den Strömungskanal 36 durchströmenden Messfluids ebenfalls innerhalb der zweiten Gehäuseebene 138 angeordnet. Vorzugsweise sind dabei die Temperaturmesseinrichtung 96 und die Feuchtigkeitsmesseinrichtung 124 bezogen auf den Strömungskanal 36 aufeinander gegenüberliegenden Seiten angeordnet.

Mit Hilfe der Feuchtigkeitsmesseinrichtung 124 und mit Hilfe der Umgebungstemperaturmesseinrichtung 130 stehen zwei weitere Parameter zur Verfügung, welche zur Messung an einem Werkstück 118 herangezogen werden können. Durch Messungen an Referenzwerkstücken kann der Einfluss dieser Parameter bestimmt, in Zuordnungsfunktionen hinterlegt und bei der Messung eines zu prüfenden Werkstücks 118 berücksichtigt werden.

Die Vorrichtungen 10, 210 ermöglichen eine besonders genaue Geometriemessung an einem Werkstück 118. Durch die korrekte Einbaulage der Referenzdüse 60, den im Wesentlichen gradlinigen Verlauf des Strömungskanals 36 sowie durch die Vielzahl der zur Verfügung stehenden Messwerte sind besonders genaue Geometriemessungen an einem Werkstück 118 möglich. Zusätzlich kann eine Diagnosefunktion zur Prüfung der Funktionsfähigkeit der Druckmesseinrichtungen 76, 82, 88 realisiert werden.

## Patentansprüche

1. Vorrichtung (10, 210) zur Geometriemessung an einem Werkstück (118), umfassend ein Gehäuse (12) mit einem Strömungskanal (36), in welchem eine Referenzdüse (60) zur Durchströmung mit einem Messfluid angeordnet ist, eine erste Druckmesseinrichtung (76) zum Messen eines ersten Messfluiddrucks stromaufwärts der Referenzdüse (60) und eine zweite Druckmesseinrichtung (82) zum Messen eines zweiten Messfluiddrucks stromabwärts der Referenzdüse (60), **gekennzeichnet durch** eine Feuchtigkeitsmesseinrichtung (124) zum Messen der Messfluidfeuchtigkeit.

2. Vorrichtung nach Anspruch 1, **gekennzeichnet durch** eine Differenzdruckmesseinrichtung (88) zum Messen eines über der Referenzdüse (60) anliegenden Messfluiddifferenzdrucks.

3. Vorrichtung (10, 210) nach Anspruch 2, **dadurch gekennzeichnet, dass** die Differenzdruckmesseinrichtung (88) an oder in dem Gehäuse (12) angeordnet ist.

4. Vorrichtung (10, 210) nach einem der voranstehenden Ansprüche, **dadurch gekennzeichnet, dass** die Feuchtigkeitsmesseinrichtung (124) eine Feuchtigkeitsmessfläche (128) aufweist, welche fluidwirksam mit dem Strömungskanal (36) verbunden ist.

5. Vorrichtung (10, 210) nach einem der voranstehenden Ansprüche, **dadurch gekennzeichnet, dass** die Feuchtigkeitsmesseinrichtung (124) in Form eines Feuchtigkeitssensors (126) ausgebildet ist.

6. Vorrichtung (10, 210) nach einem der voranstehenden Ansprüche, **dadurch gekennzeichnet, dass** die Feuchtigkeitsmesseinrichtung (124) an oder in dem Gehäuse (12) angeordnet ist.

7. Vorrichtung (10, 210) nach einem der voranstehenden Ansprüche, **gekennzeichnet durch** eine Temperaturmesseinrichtung (96) zum Messen einer Messfluidtemperatur.

8. Vorrichtung (10, 210) nach Anspruch 7, **dadurch gekennzeichnet, dass** die Temperaturmesseinrichtung (96) an oder in dem Gehäuse (12) angeordnet ist.

9. Vorrichtung (10, 210) nach einem der voranstehenden Ansprüche, **gekennzeichnet durch** eine Umgebungstemperaturmesseinrichtung (130) zum Messen einer Umgebungstemperatur der Vorrichtung (10, 210).

10. Vorrichtung (10, 210) nach Anspruch 9, **dadurch gekennzeichnet, dass** die Umgebungstemperaturmesseinrichtung (130) an oder in dem Gehäuse (12) angeordnet ist.

11. Verfahren zur Geometriemessung an einem Werkstück (118), wobei eine in einem Strömungskanal (36) eines Gehäuses (12) angeordnete Referenzdüse (60) mit einem Messfluid durchströmt wird, wobei ein erster Messfluiddruck stromaufwärts der Referenzdüse (60) gemessen wird und wobei ein zweiter Messfluiddruck stromabwärts der Referenzdüse (60) gemessen wird, **dadurch gekennzeichnet, dass** die Messfluidfeuchtigkeit des Messfluids gemessen wird.

12. Verfahren nach Anspruch 11, **dadurch gekennzeichnet, dass** zusätzlich zu dem ersten Messfluiddruck und dem zweiten Messfluiddruck ein über der Referenzdüse (60) anliegender Messfluiddifferenzdruck gemessen wird.

13. Verfahren nach Anspruch 11 oder 12, **dadurch gekennzeichnet, dass** unter Verwendung des gemessenen ersten Messfluiddrucks und/oder des gemessenen zweiten Messfluiddrucks eine Messfluidmenge ermittelt wird und eine Abmessung des Werkstücks (118) unter Verwendung der ermittelten Messfluidmenge bestimmt wird.

14. Verfahren nach Anspruch 13, **dadurch gekennzeichnet, dass** die Messfluidmenge unter Verwendung der gemessenen Messfluidfeuchtigkeit des Messfluids ermittelt wird.

15. Verwendung einer Vorrichtung nach einem der Ansprüche 1 bis 10 zur Durchführung eines Verfahrens nach einem der Ansprüche 11 bis 14.

## Claims

1. Appliance (10, 210) for measuring the geometry of a workpiece (118) comprising a housing (12) having a flow channel (36) in which there is arranged a reference nozzle (60) for the passage of a test fluid therethrough, a first pressure measuring device (76) for measuring a first pressure of the test fluid upstream of the reference nozzle (60) and a second pressure measuring device (82) for measuring a second pressure of the test fluid downstream of the reference nozzle (60), **characterized by** a moisture measuring device (124) for measuring the moisture content of the test fluid.

2. Appliance (10, 210) in accordance with Claim 1, **characterized by** a differential pressure measuring device (88) for measuring the differential pressure of the test fluid across the reference nozzle (60).

3. Appliance (10, 210) in accordance with Claim 2, **characterized in that** the differential pressure measuring device (88) is arranged on or in the housing (12).

4. Appliance (10, 210) in accordance with any of the preceding Claims, **characterized in that** the moisture measuring device (124) has a moisture measuring surface (128) which is connected in fluidic manner to the flow channel (36).

5. Appliance (10, 210) in accordance with any of the preceding Claims, **characterized in that** the moisture measuring device (124) is configured in the form of a humidity sensor (126).

6. Appliance (10, 210) in accordance with any of the preceding Claims, **characterized in that** the moisture measuring device (124) is arranged on or in the housing (12).

7. Appliance (10, 210) in accordance with any of the preceding Claims, **characterized by** a temperature measuring device (96) for measuring the temperature of the test fluid.

8. Appliance (10, 210) in accordance with Claim 7, **characterized in that** the temperature measuring device (96) is arranged on or in the housing (12).

9. Appliance (10, 210) in accordance with any of the preceding Claims, **characterized by** an ambient temperature measuring device (130) for measuring the ambient temperature of the appliance (10, 210).

10. Appliance (10, 210) in accordance with Claim 9, **characterized in that** the ambient temperature measuring device (130) is arranged on or in the housing (12).

11. Method for measuring the geometry of a workpiece (118), wherein a test fluid is arranged to flow through a reference nozzle (60) located in a flow channel (36) of a housing (12), wherein a first pressure of the test fluid is measured upstream of the reference nozzle (60) and wherein a second pressure of the test fluid is measured downstream of the reference nozzle (60), **characterized in that** the moisture content of the test fluid is measured.

12. Method in accordance with Claim 11, **characterized in that** in addition to the first pressure of the test fluid and the second pressure of the test fluid, the differential pressure of the test fluid across the reference nozzle (60) is measured.

13. Method in accordance with Claim 11 or 12, **characterized in that** a quantity of test fluid is determined using the first measured pressure of the test fluid and/or the second measured pressure of the test fluid and **in that** a dimension of the workpiece (118) is determined using the thus determined quantity of test fluid.

14. A method in accordance with Claim 13, **characterized in that** the quantity of test fluid is determined using the measured moisture content of the test fluid.

15. Use of an appliance in accordance with any of the Claims 1 to 10 for carrying out a method in accordance with any of the Claims 11 to 14.

## Revendications

1. Ensemble de mesure (10, 210) pour mesurer une caractéristique géométrique sur une pièce d'oeuvre (118), comprenant un carter (12) avec un canal d'écoulement (36) dans lequel est agencé un ajutage de référence (60) destiné à être traversé par l'écoulement d'un fluide de mesure, un premier dispositif de mesure de pression (76) pour mesurer une première pression de fluide de mesure en amont de l'ajutage de référence (60), et un deuxième dispositif de mesure de pression (82) pour mesurer une deuxième pression de fluide de mesure en aval de l'ajutage de référence (60), **caractérisé par** un dispositif de mesure d'humidité (124) pour mesurer l'humidité du fluide de mesure.

2. Ensemble selon la revendication 1, **caractérisé par** un dispositif de mesure de pression différentielle (88) pour mesurer une pression différentielle du fluide de mesure existant au passage de l'ajutage de référence (60).

3. Ensemble (10, 210) selon la revendication 2, **caractérisé en ce que** le dispositif de mesure de pression différentielle (88) est agencé sur ou dans le carter (12).

4. Ensemble (10, 210) selon l'une des revendications précédentes, **caractérisé en ce que** le dispositif de mesure d'humidité (124) présente une surface de mesure d'humidité (128), qui est en liaison active sur le plan fluidique avec le canal d'écoulement (36).

5. Ensemble (10, 210) selon l'une des revendications précédentes, **caractérisé en ce que** le dispositif de mesure d'humidité (124) est réalisé sous la forme d'un capteur d'humidité (126).

6. Ensemble (10, 210) selon l'une des revendications précédentes, **caractérisé en ce que** le dispositif de mesure d'humidité (124) est agencé sur ou dans le carter (12).

7. Ensemble (10, 210) selon l'une des revendications précédentes, **caractérisé par** un dispositif de mesure de température (96) pour mesurer une température du fluide de mesure.

8. Ensemble (10, 210) selon la revendication 7, **caractérisé en ce que** le dispositif de mesure de température (96) est agencé sur ou dans le carter (12).

9. Ensemble (10, 210) selon l'une des revendications précédentes, **caractérisé par** un dispositif de mesure de température environnante (130) pour mesurer une température environnante de l'ensemble (10, 210).

10. Ensemble (10, 210) selon la revendication 9, **caractérisé en ce que** le dispositif de mesure de température environnante (130) est agencé sur ou dans le carter (12).

11. Procédé pour mesurer une caractéristique géométrique sur une pièce d'oeuvre (118), un ajutage de référence (60) agencé dans un canal d'écoulement (36) d'un carter (12) étant traversé par l'écoulement d'un fluide de mesure, procédé d'après lequel on mesure une première pression de fluide de mesure en amont de l'ajutage de référence (60), et d'après lequel on mesure une deuxième pression de fluide de mesure en aval de l'ajutage de référence (60), **caractérisé en ce que** l'on mesure l'humidité de fluide de mesure du fluide de mesure.

12. Procédé selon la revendication 11, **caractérisé en ce qu'**en plus de la première pression de fluide de mesure et de la deuxième pression de fluide de mesure, on mesure une pression différentielle du fluide de mesure existant au passage de l'ajutage de référence (60).

13. Procédé selon la revendication 11 ou la revendication 12, **caractérisé en ce que** moyennant l'utilisation de la première pression de fluide de mesure ayant été mesurée et/ou de la deuxième pression de fluide de mesure ayant été mesurée, on détermine une quantité de fluide de mesure, et on établit une dimension de la pièce d'oeuvre (118) à partir de cette quantité de fluide de mesure ayant été déterminée.

14. Procédé selon la revendication 13, **caractérisé en ce que** la quantité de fluide de mesure est déterminée en utilisant l'humidité de fluide de mesure du fluide de mesure, ayant été mesurée.

15. Utilisation d'un ensemble selon l'une des revendications 1 à 10 pour la mise en oeuvre d'un procédé selon l'une des revendications 11 à 14.
